# EUROPEAN PATENT APPLICATION

(11) **EP 2 586 740 A1**
(43) Date of publication of application: **01.05.2013**
(21) Application number: 10853621.0
(22) Date of filing: 22.06.2010
(51) Int. Cl.: B68F 1/00, C14B 1/56

(54) **MANUFACTURING METHOD OF THREE-DIMENSIONAL SHAPED BODY, MANUFACTURING KIT OF SAME, AND MOLD OF SAME**

(71) Applicant: Kimishima, Masumi, Tokyo 106-0047 (JP)
(72) Inventor: Kimishima, Masumi, Tokyo 106-0047 (JP)
(74) Representative: Klunker . Schmitt-Nilson . Hirsch
(86) International application number: PCT/JP2010/060528
(87) International publication number: WO 2011/161761

(57) **Abstract**

Providing the manufacturing technology of the three-dimensional shaped body, which can be made from a leather sheet, be made by low cost and be made to complex shape. The manufacturing technology of the three-dimensional shaped body, includes: a master mold (10) having a transfer surface (11); a shaping mold (16) having a shaping space (V) impressed an inverse shape with respect to the transfer surface (11); wherein the master mold (10) is inserted into the shaping space (V) along with an extensible leather sheet (17) and then the transferring a shape of the transfer surface (11) to the leather sheet (17) to be converted into the three-dimensional shaped body(18).

## Description

### Technical Field

Embodiments described herein relate generally to a manufacturing technology of the three-dimensional shaped body manufactured from a leather sheet.

### Background Art

The desired three-dimensional shaped body is manufactured by humidifying natural leather to make it soften for plastic deformation. Such a three-dimensional shaped body is manufactured by inserting and pressing the leather sheet between a pair of metallic molds which have an inverse shape to each other (for example, see Patent Document 1 (Japanese Patent Laid-Open No. 1995-138600)).

### Citation List

### Patent Literature

Patent Literature 1: JP1995-138600A

### Summary of the Invention

### Technical Problem

By the way, a manufacturing art such a three-dimensional shaped body from a leather sheet is widely applied to various kinds of industries, such as a toy, clothing, footwear, accessories, and sporting-goods, and they are mass production in use.

While it is necessary for the pressing die of the leather sheet to be produced every three-dimensional shaped body. Besides it is difficult for above technology to cope with the complex shape having an undercut.

For this reason, manufacturing the three-dimensional shaped body from the leather sheet by die pressing, there are some problem such a cost overrun for manufacturing and a limitation for applicable shape.

The present invention was made in consideration of such a situation, and providing the production technology of the three-dimensional shaped body which can be made from a leather sheet, be made by low cost and be made to complex shape.

### Solution to Problem

A manufacturing method of three-dimensional shaped body, includes the steps of: supporting a master mold at an opposite side of a transfer surface; immersing the transfer surface in a fluid and then solidifies the fluid; removing the master mold from the solidified fluid and then forming a shaping space impressed an inverse shape with respect to the transfer surface; and inserting the master mold into the shaping space along with an extensible leather sheet and then transferring a shape of the transfer surface to the leather sheet to be converted into the three-dimensional shaped body.

### Brief Description of Drawings

Fig.1 (A) - (D) illustrates an operation showing a first embodiment of the present invention for the manufacturing method of three-dimensional shaped body.
Fig.2 (E) - (I) illustrates an operation showing a first embodiment of the present invention for the manufacturing method of three-dimensional shaped body.
Fig.3 (J) - (M) illustrates an operation showing a first embodiment of the present invention for the manufacturing method of three-dimensional shaped body.
Fig.4 (A) - (C) illustrates an operation showing a second embodiment of the present invention for the manufacturing method of three-dimensional shaped body.

### Description of Embodiments

### (The first embodiment)

Hereafter, the embodiment of the present invention is described based on an accompanying drawing.

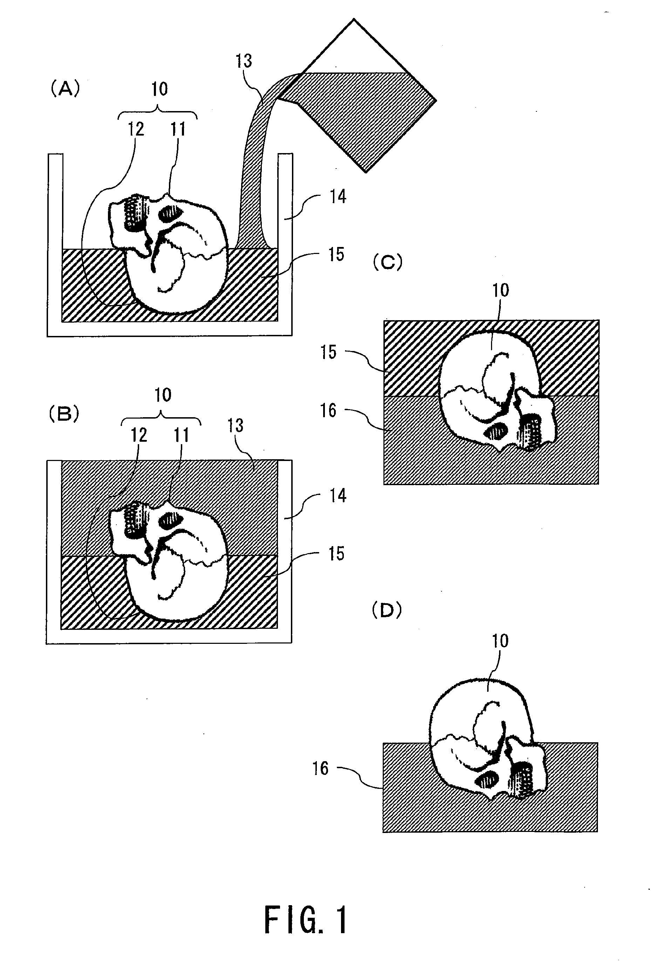

As shown in Fig.1A, a master mold 10 is supported at an opposite side 12 of a transfer surface 11.

Concretely the clay 15 is applied to support the opposite side 12. The clay 15 is filled with the bottom of the container 14 which accommodates the master mold 10. Then the fluid 13 is poured from the upper part of container 14 to immerse the transfer surface 11.

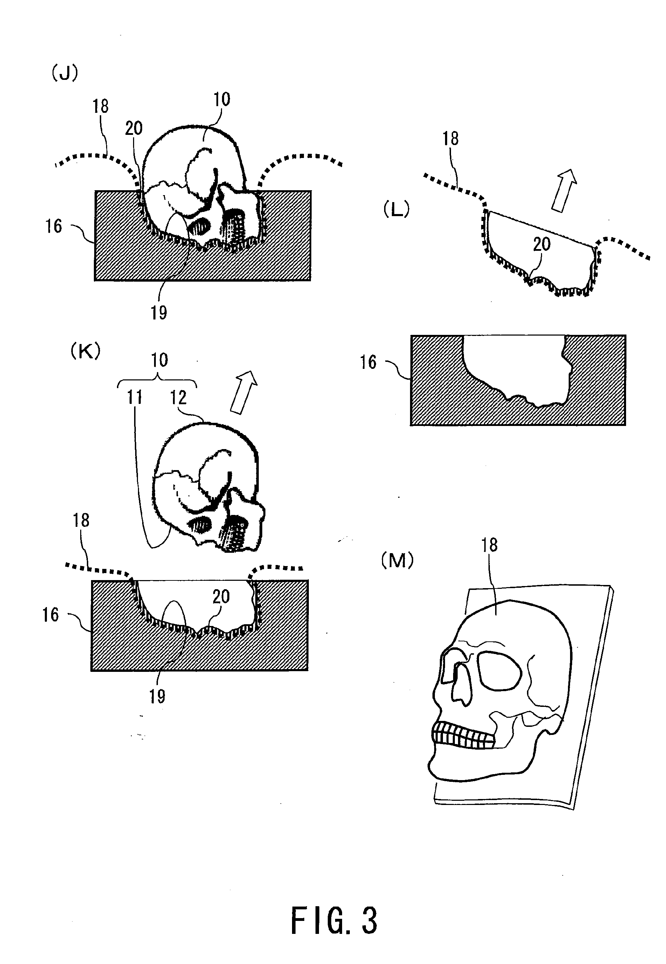

In this embodiment the skull ornament is exemplified as the master mold 10 having the feature of a three-dimensional for deep engraving and large construction ratio. The master mold 10 is set so that the transfer surface 11 may be correspond to the three-dimensional shaped body 18 (refer to Fig.3M), and other portions (opposite side 12) may be laid underground into the clay 15.

Thus, the silicone fluid 13 is poured into the transfer surface 11 of the master mold 10 so that an air gap may not remain. For example, the applied silicone is CR-104 high-performance seamless silicone made of Glass Coat Co., Ltd.

Before pouring the fluid 13, it is desirable coating a mold-releasing agent to the surface of the transfer surface 11 of the master mold 10, the clay 15, and the container 14, in order to secure the mold-release characterization in a subsequent process.

As shown in Fig.1B, the silicone fluid 13 solidifies to a silicone gel having rubber elasticity, if it leaves as it is for a predetermined time after the transfer surface 11 immersed

As shown in Fig.1C, solidified fluid 13 keeps the shape to be a shaping mold 16, even after destroy or remove the container 14.

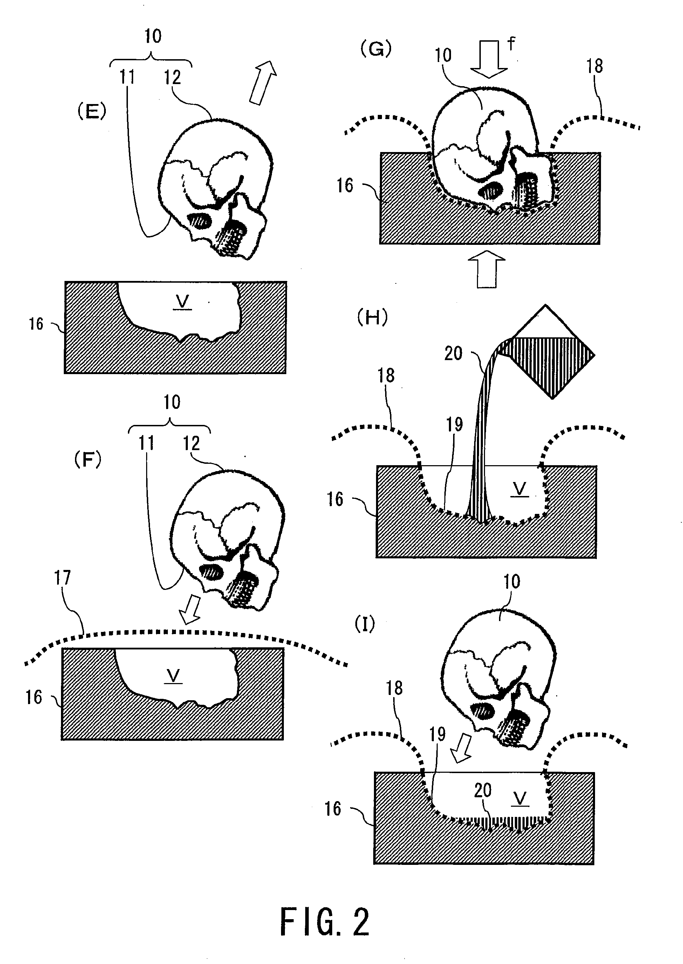

As shown in Fig.1D, the clay 15 is removed, and as shown in Fig.2E, the master mold 10 is removed from the solidified fluid (shaping mold 16), and then forming the shaping space V impressed an inverse shape with respect to the transfer surface 11.

Next, as shown in Fig.2F, inserting the master mold 10 into the shaping space V along with an extensible leather sheet 17 and then transferring a shape of the transfer surface 11 to the leather sheet 17 to be converted into the three-dimensional shaped body 18 (Fig.2G).

In this embodiment, the leather sheet 17 assumes natural leather.

The natural leather will be softened by humidifying or soaking and it will have sufficient extensibility to carry out deformation processing. Because the collagen which is an ingredient of the natural leather swells by containing water, and the swelling state becomes easy plastic deformation under the stress.

A water is usually use for an agent to soften the natural leather sheet 17 but a crumpling technique or a conventional softener also may be use. In the process of Fig.2F, it is preferable that the leather sheet 17 is pre-extended according to the form of the shaping space V by manual labor.

In this embodiment the natural leather assumes tanned leather, and it can also use non-tanned leather.

The thickness of the leather sheets 17 may be determined within the range of 0.1 - 3 mm depending on the form of the shaping space V. In order to reproduce the irregular pattern of the transfer surface 11 correctly, it is preferable that the thickness of leather sheets 17 is within the range of 0.1 - 0. 15 mm. Then the process for adjusting the thickness of the leather sheet 17 may be added if needed.

Next, the swelled natural leather sheet 17 keeps in the inserting state for a while between the master mold 10 and the shaping space V to be dry (Fig.2G). At this time, it is preferable that the pressing force f is supplied on the master mold 10 in the direction of the shaping mold 16.

Thereby, after the leather sheet 17 changes from a swelling state to a dry state, the pattern of the transfer surface 11 of the master mold 10 and the shaping space V is faithfully reproduced on the leather sheet 17.

By the way, the formation of the molecule chain of the collagen which constituent of the natural leather may deform easily if stress is given in the swelling state and the deformation will be maintained as it is when it dries, but it has the character returning to the original form when the stress is removed in a humidified environment. For this reason, it is anxious about that the three-dimensional shaped body 18 manufactured with deep-drawing method from the leather sheet 17 may lose shape with time dependence.

Then, it is desirable the morphological stability of the formed three-dimensional shaped body 18 to be increased. Therefore, polymer aqueous solution as a shape stabilizer is made to impregnate into the leather sheet 17 before setting it to the shaping mold 16. Otherwise the shape stabilizer as a reinforcing agent 20 (Fig.2H) mentioned later may be provided to the contact face 19 of the three-dimensional shaped body 18.

As such the shape stabilizer, water-soluble polyurethane resin, a water-soluble acrylic resin, natural rubber latex, synthetic rubber latex, etc. are mentioned.

In the state of Fig.2G, in order to change the three-dimensional shaped body 18 in a wet condition into a dry condition for a short time, it is good to adjust the atmosphere low humidity and high temperature. Then the master mold 10 is removed from the shaping mold 16 if the three-dimensional shaped body 18 changed into the dry state.

Next, as shown in Fig.2H, a reinforcing agent 20 is provided to the contact face 19 of the three-dimensional shaped body 18 in which the master mold may contact with. Then as shown in Fig.2I, the master mold 10 inserts into the shaping space V to lengthen and solidify the provided reinforcing agent 20 along the contact face 19(Fig.3J).

As shown in Fig.3K, in order to improve the mold-release characteristic of removing the master mold 10, it is preferable applying a release agent to the transfer surface 11 of the master mold 10 beforehand.

The function of the reinforcing agent 20 is improving the mechanical strength of the three-dimensional shaped body 18 which has a cavity shape.

Silicone is preferable as the reinforcing agent 20 having a high strength after hardening, and other preferable may be conventional an ultraviolet curing resin, a thermoplastic, and a thermosetting resin.

When using the ultraviolet curing resin as the reinforcing agent 20, as shown in Fig.3(K), after removing the master mold 10, UV irradiation is executed to solidify the reinforcing agent 20 provided to the contact face 19 uniformly.

When using the thermoplastics as the reinforcing agent 20, heat it to be plasticized and then supplied as shown in Fig.2H, fully cooling to normal temperature to solidify in the state of Fig.3J and then remove the master mold 10 (Fig.3K).

When using the thermosetting resin as the reinforcing agent 20, it is possible to apply a two-liquid mixing type consisting of a base resin and a hardening agent. The mixed two-liquid for the reinforcing agent 20 is supplied as shown in Fig.2H, and maintain until it fully solidified in the state of Fig.3J, and removing the master mold 10 (Fig.3K).

After that, as shown in Fig.3L, the three-dimensional shaped body 18 is removed from the shaping mold 16, as shown in Fig.3M, the acquired three-dimensional shaped body 18 shows the half side of the face of skull ornament used as the master mold.

Further returning to the process of Fig.2F again, two or more three-dimensional shaped bodies 18 can be manufactured from one shaping mold 16 repeatedly.

### (The second embodiment)

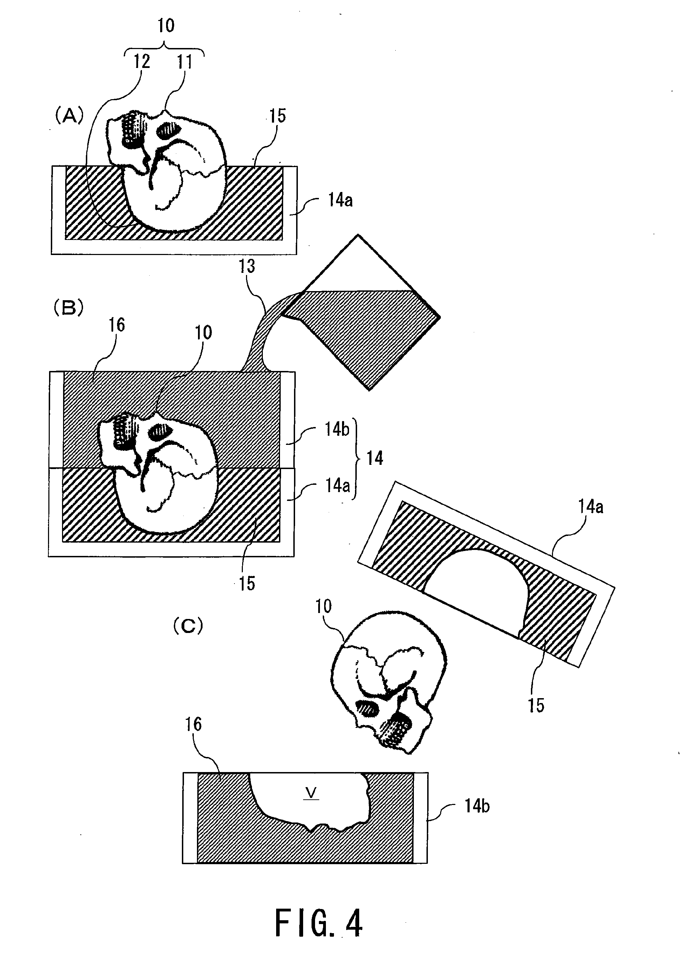

With reference to Fig.4A the second embodiment in the present invention is described. Note that in Fig. 4, the same reference numerals or characters are assigned to the components which are the same as or similar to those in Fig. 1 and the detailed description is omitted by quoting already indicated description. Since the process continuing behind Fig.4C in the second embodiment is the same as the process continuing behind Fig.2F in the first embodiment, the description thereof is omitted.

According to the second embodiment, as shown in Fig.4B, the container 14 having a separated structure with which one parts 14b filled with the fluid 13 and the other parts 14a filled with the clay 15.

As shown in Fig.4C, when removing the master mold 10, it carries out by separating the container 14 (14a, 14b).

That makes the working efficiency improve since the supporting process of the master mold 10 on the clay 15 shown in Fig.4A is executed under nonexistence of the fluid filling side 14b. Further, as shown in Fig.4C, the process of removing clay 15 and the process of removing master mold 10 can be executed almost simultaneous, if the side 14b filled with the fluid 13 and the side 14a filled with the clay 15 are twisted mutually.

After removing the parts 14a filled with the clay 15 shown in the Fig.4C, the process shown in Fig.4A can be executed immediately.

The shaping mold 16 is configured to be surrounded by the fluid filling parts 14b. For this reason, in the process shown in Fig.2F of inserting the master mold 10 in the shaping space V along with the leather sheet 17, shaping mold 16 does not expand into outside. Therefore, the shape of the shaping space V maintains the inverse shape with respect to the transfer surface 11 of the master mold 10, and manufacturing the three-dimensional shaped body 18 excellent in reproducibility.

### (The third embodiment)

The third embodiment of the present invention concerning the manufacturing kit of the three-dimensional shaped body is explained.

This embodiment comprises as a kit for manufacturing the three-dimensional shaped body 18 (Fig.3M) for an art hobby.

That is, the master mold can be chosen arbitrarily and the manufacture kit includes the leather sheet 17, the container 14 (14a, 14b) which accommodates the master mold inside, the clay 15 with which the bottom of the container 14 is filled up to support the opposite side of the transfer surface of the master mold, and the fluid 13 which is filled up from the upper part of the container 14 to immerse the transfer surface.

### (The fourth embodiment)

The fourth embodiment of the present invention concerning the form block of the three-dimensional shaped body is explained.

This embodiment is comprised as the shaping mold for the mass-producing of the three-dimensional shaped body 18 (Fig.3M).

That is, the shaping mold includes the master mold 10 which have the transfer surface 11, and the shaping mold 16 which have the shaping space V impressed an inverse shape with respect to the transfer surface 11.

Then the master mold 10 is inserted in the shaping space V along with the extensible leather sheet 17 and then the leather sheet 17 is converted to the three-dimensional shaped body 18 with respect to the shape of transfer surface 11.

While certain embodiments have been described, these embodiments have been presented by way of example only, and are not intended to limit the scope of the inventions. Indeed, the novel process and system described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

For example, as a member which supports the opposite side 12 of the master mold 10, it is not limited to the clay 15 as shown in an embodiment. Such the member can be applied suitably to support the master mold 10 may not be moved and the flat surface of fluid 13 may be formed in the periphery of transfer surface 11.

Besides it is not limited that the fluid 13 is filled with from the upper side. For example, reversing the direction of top and bottom of the master mold 10 in Fig.1A, and makes the transfer surface 11 to turn downward and immerse the fluid 13 reservoir.

### Reference Signs List

| | |
|---|---|
| 10 | master mold |
| 11 | transfer surface |
| 12 | opposite side |
| 13 | fluid |
| 14 | container |
| 14a | clay filling parts |
| 14b | fluid filling parts |
| 15 | clay |
| 16 | shaping mold |
| 17 | leather sheet |
| 18 | three-dimensional shaped body |
| 19 | contact face |
| 20 | reinforcing agent |
| V | shaping space |

## Claims

1. A manufacturing method of three-dimensional shaped body, comprising the steps of:
supporting a master mold at an opposite side of a transfer surface;
immersing the transfer surface in a fluid and then solidifies the fluid;
removing the master mold from the solidified fluid and then forming a shaping space impressed an inverse shape with respect to the transfer surface; and
inserting the master mold into the shaping space along with an extensible leather sheet and then transferring a shape of the transfer surface to the leather sheet to be converted into the three-dimensional shaped body.

2. The manufacturing method of three-dimensional shaped body according to claim 1, wherein
the opposite side is supported by a clay filled with a bottom of a container which accommodates the master mold; and
the fluid is poured from the upper side of the container to immerse the transfer surface.

3. The manufacturing method of three-dimensional shaped body according to claim 1, further comprise the steps of:
providing a reinforcing agent to a contact face of the three-dimensional shaped body, the contact face is contacted with the master mold; and
re-inserting the master mold into the shaping space to lengthen and solidify the reinforcing agent.

4. The manufacturing method of three-dimensional shaped body according to claim 3, wherein
the solidified fluid or the solidified reinforcing agent is a silicone gel.

5. The manufacturing method of three-dimensional shaped body according to claim 2, wherein
the container is separated into two parts, one part is filled with the fluid, and the other part is filled with the clay; and
the removing master mold is executed by separating the container.

6. A manufacturing kit of three-dimensional shaped body means for executing the manufacturing method of claim1, comprising:
the leather sheet; a container accommodates the master mold inside; a clay filled with a bottom of the container to support the opposite side of the master mold; and the fluid poured from the upper side of the container to immerse the transfer surface.

7. A shaping mold of three-dimensional shaped body, comprising:
a master mold having a transfer surface; and shaping mold having a shaping space impressed an inverse shape with respect to the transfer surface; wherein
the master mold is inserted into the shaping space along with an extensible leather sheet and then transferring a shape of the transfer surface to the leather sheet to be converted into the three-dimensional shaped body.
